# EUROPÄISCHE PATENTSCHRIFT

(11) **EP 0 978 039 B1**
(45) Veröffentlichungstag und Bekanntmachung des Hinweises auf die Patenterteilung: **12.09.2001**
(21) Anmeldenummer: 97930300.5
(22) Anmeldetag: 03.06.1997
(51) Int. Cl.: G06F 11/14

(54) **AUFDATVERFAHREN**
DATA LOADING PROCESS
PROCEDE DE CHARGEMENT DE DONNEES

(30) Priorität: 18.06.1996 DE 19624302
(43) Veröffentlichungstag der Anmeldung: 09.02.2000
(73) Patentinhaber: SIEMENS AKTIENGESELLSCHAFT, 80333 München (DE)
(72) Erfinder: BARTHEL, Herbert, D-91074 Herzogenaurach (DE); FUCHS, Heiner, D-91056 Erlangen (DE); GÖBEL, Alfons, D-91058 Erlangen (DE)
(86) Internationale Anmeldenummer: DE9701110
(87) Internationale Veröffentlichungsnummer: WO9749032

(56) Entgegenhaltungen:
- EP-A- 0 566 967
- WO-A-92/18931
- US-A- 5 241 670

## Beschreibung

Die vorliegende Erfindung betrifft ein Aufdatverfahren zum Ankoppeln eines Zusatzautomatisierungssystemes an ein ein Basisautomatisierungssystem aufweisendes Automatisierungsgesamtsystem, welches einen technischen Prozeß unterbrechungsfrei steuert. Die Automatisierungssysteme haben dabei jeweils Zugriff auf einen eigenen Hauptspeicherbereich und können über Kommunikationsmittel Daten untereinander und mit dem technischen Prozeß austauschen.

Derartige redundante Automatisierungssysteme sind weit verbreitet. Meist sind die Automatisierungssysteme dabei einfach oder doppelt redundant, d.h. es werden zwei bis drei Automatisierungssysteme zur Steuerung ein und desselben technischen Prozesses bzw. der technischen Anlage verwendet. Bei einer derartigen Konfiguration kann es vorkommen, daß eines der Automatisierungssysteme, nachfolgend als Zusatzautomatisierungssystem bezeichnet, ausfällt und die technische Anlage durch das verbleibende Automatisierungssystem, das Basisautomatisierungssystem, bzw. die verbleibenden Automatisierungssysteme geführt wird.

Das Aufdaten beim Ankoppeln eines Zusatzautomatisierungssystemes an ein durch mindestens ein Automatisierungssystem gebildetes Automatisierungsgesamtsystemes ist also beispielsweise erforderlich, wenn im Zuge von Wartungsarbeiten eines der Automatisierungssysteme vorübergehend stillgelegt wurde und nach Abschluß der Wartungsarbeiten wieder in Betrieb gesetzt wird. Beim Ankoppeln des vorübergehend stillgelegten Automatisierungssystemes ist es vor allem relevant, daß das anzukoppelnde Zusatzautomatisierungssystem den Datenbestand des Basisautomatisierungssystemes übernimmt. Dieser Vorgang wird als Aufdaten bezeichnet.

Gegenstand des Aufdatverfahrens ist somit das Übertragen des Inhaltes des Hauptspeicherbereiches eines Basisautomatisierungssystemes an ein Zusatzautomatisierungssystem. Die EP-A-0 636 956 beschreibt ein Aufdatverfahren, bei dem im Basisautomatisierungssystem die Datenkonfigurationen zeitunkritischer Zustände und die zugehörigen Zeitdauern vorgegeben sind, während derer das Reagieren auf Zustandsänderungen des technischen Prozesses zeitunkritisch ist. Wenn die Dauer des zeitunkritischen Zustandes die für das Aufdaten erforderliche Dauer übersteigt, wird das Aufdaten ausgelöst.

Wenn kein hinreichender zeitunkritischer Zustand existiert, erfolgt das Aufdaten gemäß dem in der EP-A-0 636 956 beschriebenen Verfahren innerhalb von sogenannten Zeitscheiben, die zyklisch in die Programmabarbeitung eingefügt werden. Das eigentliche Aufdaten erfolgt dabei jeweils durch abschnittsweises Auslesen aus dem Hauptspeicherbereich des Basisautomatisierungssystemes und Einschreiben in den Hauptspeicherbereich des Zusatzautomatisierungssystemes.

Auch das abschnittsweise Auslesen von Daten ist zeitaufwendig. Speziell für den Fall, daß ein zeitkritischer Prozeß vom Basisautomatisierungssystem, dessen Daten ausgelesen werden müssen, gesteuert wird, ist zu berücksichtigen, daß das steuernde Basisautomatisierungssystem den Prozeß während des Auslesens nicht überwachen kann und damit auf Zustandsänderungen des Prozesses möglicherweise nicht rechtzeitig reagieren kann. Vielfach ist auch ein solche kurzfristige "Überwachungslücke" bei der Steuerung des technischen Prozesses nicht tolerierbar.

Aufgabe der Erfindung ist es daher, ein Aufdatverfahren zum Ankoppeln eines Zusatzautomatisierungssystemes an ein ein Basisautomatisierungssystem aufweisendes, einen technischen Prozeß unterbrechungsfrei steuerndes Automatisierungsgesamtsystem anzugeben, das ohne Beeinträchtigung der Steuerung des technischen Prozesses ausführbar ist.

Die Aufgabe wird mittels eines Aufdatverfahrens gelöst, das durch die Merkmale des Patentanspruchs 1 charakterisiert ist. Aufgrund der durch den zu steuernden technischen Prozeß vorgegebenen Randbedingungen ist es nicht möglich, den Inhalt des Hauptspeicherbereiches des Basisautomatisierungssystemes in einem Zug in das anzukoppelnde Zusatzautomatisierungssystem zu übertragen. Das Aufdaten wird daher in zwei Durchläufe unterteilt.

In einem ersten Durchlauf wird der Inhalt des Hauptspeicherbereiches des Basisautomatisierungssystemes durch sukzessives Auslesen aus dem Hauptspeicherbereich des Basisautomatisierungssystemes und Einschreiben in den Hauptspeicherbereich des Zusatzautomatisierungssystemes übertragen. Der Umfang der dabei jeweils in einem Schritt ausgelesenen bzw. eingeschriebenen Daten wird durch die für diesen Vorgang benötigte Zeitspanne und die in Bezug auf den zu steuernden technischen Prozeß maximal tolerierbare Latenzphase des Basisautomatisierungssystemes bestimmt.

Wenn beim abschnittsweisen Auslesen von Daten aus dem Hauptspeicherbereich des Basisautomatisierungssystemes dieselben Daten in einen Zwischenspeicherbereich eingeschrieben werden, so kann vorteilhafterweise das Basisautomatisierungssystem die Steuerung des technischen Prozesses bereits wieder aufnehmen, während die Daten aus dem Zwischenspeicherbereich an das Zusatzautomatisierungssystem übertragen werden. Die Zeit, in der das Basisautomatisierungssystem den technischen Prozeß nicht überwachen kann, verkürzt sich somit durch den Einsatz des Zwischenspeicherbereiches.

Je leistungsfähiger das Kommunikationsmittel ist, über das die Daten vom Hauptspeicherbereich des Basisautomatisierungssystemes in den Zwischenspeicherbereich übertragen werden, desto geringer wird die Zeitspanne, in der das Basisautomatisierungssystem den technischen Prozeß nicht überwachen kann.

Ein ähnlich positiver Einfluß wird durch Einsatz eines leistungsfähigen, für den Einsatzfall optimalen Speichers ― z.B. ein statisches RAM oder ein statisches RAM als Dual-Port-RAM ― für den Zwischenspeicherbereich erreicht.

Nach einer bestimmten Anzahl der oben beschriebenen Auslese- und Einschreibevorgänge ist eine Übertragung des "Grunddatenbestandes" des Basisautomatisierungssystemes an das Zusatzautomatisierungssystem realisiert. Während dieser Zeit sind jedoch die Daten im Hauptspeicherbereich des Basisautomatisierungssystemes aufgrund der nicht unterbrochenen Steuerung des technischen Prozesses einer kontinuierlichen Veränderung unterworfen, denn es ändern sich beispielsweise auch Zähler- und Timerwerte sowie die Ausgangssignale. Bevor das Aufdaten als beendet angesehen werden kann, muß auch die Gleichheit dieser Daten sichergestellt sein.

Die in der Zwischenzeit im Basisautomatisierungssystem aufgetretenen Veränderungen müssen mithin in mindestens einem weiteren, nachgeschalteten Aufdatdurchlauf übertragen werden.

Dazu werden beim Einschreiben von neuen und/oder geänderten Daten in den Hauptspeicherbereich des Basisautomatisierungssystemes dieselben Daten zusammen mit einer Positionsinformation zusätzlich auch in den Zwischenspeicherbereich eingeschrieben. Der Inhalt des Zwischenspeicherbereiches wird an das Zusatzautomatisierungssystem übertragen und die übertragenen Daten werden unter Auswertung der Positionsinformation in den Hauptspeicherbereich des Zusatzautomatisierungssystemes eingeschrieben.

Die Positionsinformation beinhaltet dabei Daten über die Position der geänderten Daten im Hauptspeicherbereich des Basisautomatisierungssystemes und darüber hinaus zusätzlich zumindest Informationen über die Datenmenge. Diese Positionsinformationen werden beim Einschreiben in den Hauptspeicherbereich des Zusatzautomatisierungssystemes ausgewertet, so daß die übertragenen Daten im Hauptspeicherbereich des Zusatzautomatisierungssystemes die gleiche Position belegen, wie die Ursprungsdaten im Hauptspeicherbereich des Basisautomatisierungssystemes.

Diese Positionsinformationen sind zwingend nur erforderlich bei der Übertragung von neuen und/oder geänderten Werten während des mindestens einen weiteren Aufdatdurchlaufes. Beim abschnittsweisen Auslesen von Daten aus dem Hauptspeicherbereich des Basisautomatisierungssystemes und beim Einschreiben dieser Daten in den Zwischenspeicherbereich sind die Positionsinformationen unter der Voraussetzung nicht erforderlich, daß festgelegt ist, daß die ausgelesenen Daten im Zwischenspeicherbereich stets den gleichen Bereich belegen und daß der so belegte Bereich des Zwischenspeicherbereiches an das Zusatzautomatisierungssystem übertragen wird, bevor dieser beim erneuten abschnittsweisen Auslesen von Daten aus dem Hauptspeicherbereich des Basisautomatisierungssystemes überschrieben wird. Bei einer solchen Vorgehensweise liegen die Positionsinformationen quasi implizit vor. Das Aufdatverfahren protokolliert die Anzahl der aus dem Hauptspeicherbereich des Basisautomatisierungssystemes ausgelesenen Abschnitte und liest anhand dieser Informationen jeweils den nächsten Abschnitt ein. Darüber hinaus protokolliert das Zusatzautomatisierungssystem beim Einschreiben von Daten in dessen Hauptspeicherbereich die Anzahl der bereits eingeschriebenen Abschnitte, so daß jeweils der nächstfolgende Abschnitt aufgedatet wird.

Weitere Vorteile und Einzelheiten ergeben sich aus der nachfolgenden Beschreibung eines Ausführungsbeispieles, anhand der Zeichnung und in Verbindung mit den weiteren Unteransprüchen.

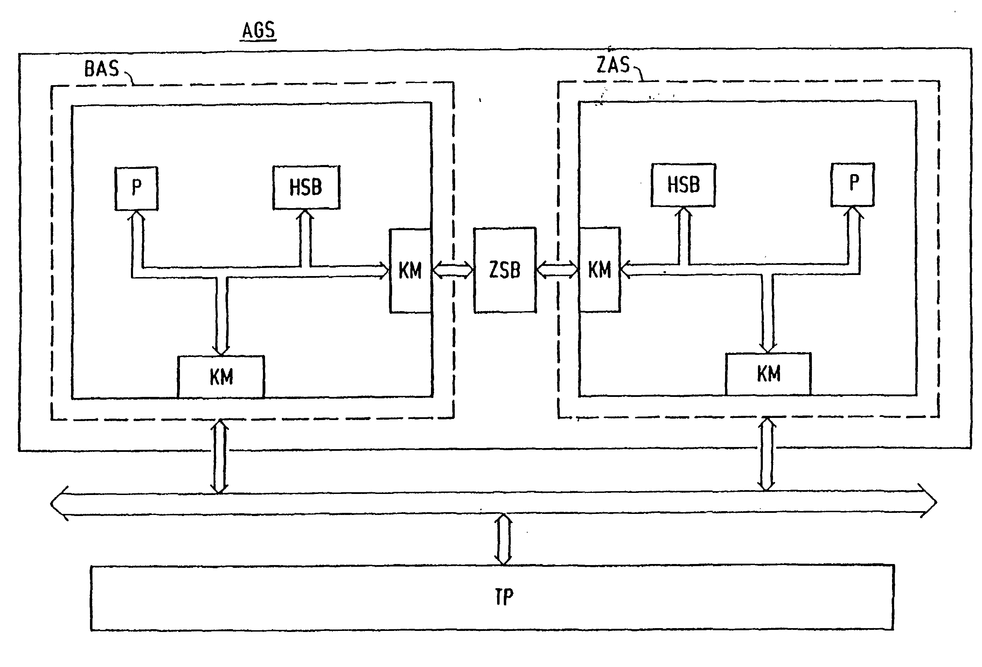

Dabei zeigt
- FIG 1: ein Blockschaltbild eines Automatisierungssystemes.

Gemäß FIG 1 wird ein - nur schematisch dargestellter - technischer Prozeß TP durch ein Automatisierungsgesamtsystem AGS gesteuert. Das Automatisierungsgesamtsystem AGS weist mindestens ein Basisautomatisierungssystem BAS sowie mindestens ein Zusatzautomatisierungssystem ZAS auf. Das Basisautomatisierungssystem BAS wird im folgenden kurz als Basissystem BAS, das Zusatzautomatisierungssystem ZAS als Zusatzsystem ZAS bezeichnet.

Zur Steuerung des technischen Prozesses TP weisen die Automatisierungssysteme BAS, ZAS einen Prozessor P auf, der zur Steuerung des technischen Prozesses TP ein Programm abarbeitet, das im Hauptspeicherbereich HSB abgespeichert ist. Weiterhin sind im Hauptspeicherbereich HSB zumindest Prozeßdaten abgespeichert, die z.B. den aktuellen Zustand des gesteuerten technischen Prozesses repräsentieren. Weiterhin weisen die Automatisierungssysteme BAS, ZAS Kommunikationsmittel KM zur Kommunikation mit dem technischen Prozeß TP sowie zur Kommunikation mit anderen Automatisierungssystemen BAS, ZAS des Automatisierungsgesamtsystemes AGS auf. Basissystem BAS und Zusatzsystem ZAS sind im wesentlichen baugleich.

Im vorliegenden Fall ist angenommen, daß das Basissystem BAS den technischen Prozeß TP ausschließlich steuert und daß das Zusatzsystem ZAS an das Basissystem BAS angekoppelt werden soll, um bei einem eventuellen Ausfall des Basissystemes BAS die Steuerung des technischen Prozesses TP unmittelbar zu übernehmen. Hierzu muß nicht nur das Programm im Hauptspeicherbereich HSB des Basissystemes BAS identisch mit dem Programm im Hauptspeicherbereich HSB des Zusatzsystemes ZAS sein, sondern es müssen auch die Prozeßdaten, die in den Hauptspeicherbereichen HSB der Automatisierungsysteme BAS, ZAS abgespeichert sind, übereinstimmen.

Das Zusatzsystem ZAS darf während des Aufdatens selbstverständlich weder das Programm noch schreibende Peripheriezugriffe ausführen. Das Mitausführen von lesenden Peripheriezugriffen dagegen ist sogar von Vorteil, das sich hierdurch das Zusatzsystem ZAS implizit aktualisiert.

Der Inhalt des Hauptspeicherbereiches HSB des Basissystemes BAS wird durch abschnittsweises Auslesen und Einschreiben in den Hauptspeicherbereich HSB des Zusatzsystemes ZAS an das Zusatzsystem ZAS übertragen. Dabei werden beim abschnittsweisen Auslesen von Daten aus dem Hauptspeicherbereich HSB des Basissystemes BAS dieselben Daten in einen Zwischenspeicherbereich ZSB eingeschrieben. Beim Einschreiben von Daten, insbesondere beim Einschreiben von neuen und/oder geänderten Daten in den Hauptspeicherbereich HSB des Basissystemes BAS werden dieselben Daten zusammen mit einer Positionsinformation zusätzlich auch in den Zwischenspeicherbereich ZSB eingeschrieben. Der Inhalt des Zwischenspeicherbereiches ZSB wird in das Zusatzsystem ZAS übertragen. Die Übertragung erfolgt dabei entweder durch aktives Lesen des Zusatzsystemes ZAS oder durch aktives, durch die den Zwischenspeicherbereich ZSB kontrollierende Instanz BAS, ZAS initiiertes Schreiben, wobei die aus dem Zwischenspeicherbereich ZSB an das Zusatzsystem ZAS übertragenen Daten in den Hauptspeicherbereich HSB des Zusatzsystemes ZAS eingeschrieben werden. Für den Fall, daß es sich bei den aus dem Zwischenspeicherbereich ZSB an das Zusatzsystem ZAS übertragenen Daten um Daten mit einer zugeordneten Positionsinformation handelt, werden diese Daten zum Einschreiben in den Hauptspeicherbereich HSB des Zusatzsystemes ZAS ausgewertet.

In einer vorteilhaften Ausgestaltung des Aufdatverfahrens sind auch den Daten, die beim abschnittsweisen Auslesen aus dem Hauptspeicherbereich HSB des Basissystemes BAS in den Zwischenspeicherbereich ZSB eingeschrieben werden, Positionsinformationen zugeordnet. Auf diese Weise kann das Übertragen von Daten aus dem Hauptspeicherbereich HSB des Basissystemes BAS in den Zwischenspeicherbereich ZSB vollkommen entkoppelt von dem Übertragen der Daten aus dem Zwischenspeicherbereich ZSB in den Hauptspeicherbereich HSB des Zusatzsystemes ZAS erfolgen.

Beim Übertragen von Daten aus den Hauptspeicherbereich HSB des Basissystemes BAS in den Zwischenspeicherbereich ZSB erfolgt das Einschreiben von Daten in den Zwischenspeicherbereich ZSB zu vorbestimmten Zeitpunkten. Auf diese Weise ist es möglich, daß das Einschreiben von Daten jeweils zu solchen Zeitpunkten erfolgt, die für das Übertragen der Daten besonders geeignet sind, so daß die Überwachung des zu steuernden technischen Prozesses TP möglichst wenig beeinträchtigt wird. Diese besonders geeigneten Zeitpunkte können z.B. äquidistante Zeitpunkte sein oder Zeitpunkte, die sich aus einem besonderen Zustand - ein explizit als unterbrechbar markierter Bereich/Abschnitt, das Fehlen kritischer Operationen innerhalb eines bestimmten Bereiches/Abschnittes, etc. - des zur Steuerung des technischen Prozesses TP abgearbeiteten Programmes ergeben.

Das Aufdaten erfolgt besonders schnell und sicher, wenn diejenigen Daten, die beim Einschreiben von Daten in den Hauptspeicherbereich HSB des Basissystemes BAS zusätzlich auch in den Zwischenspeicherbereich ZSB eingeschrieben wurden, jeweils unverzüglich an das Zusatzsystem ZAS übertragen werden. Auch bei dieser unverzüglichen Übertragung bleibt die Entkopplung der Übertragungsvorgänge vom Hauptspeicherbereich HSB des Basissystemes BAS in den Zwischenspeicherbereich ZSB und vom Zwischenspeicherbereich ZSB in den Hauptspeicherbereich HSB des Zusatzsystemes ZAS erhalten.

Aufgrund der unterbrechungsfreien Steuerung des technischen Prozesses TP durch das Basissystem BAS ist der Datenbestand des Basissystemes BAS einer kontinuierlichen Veränderung unterworfen. Diese Veränderungen können dabei durchaus auch in Bereichen auftreten, die bereits durch abschnittsweises Auslesen und Einschreiben an das Zusatzsystem ZAS übertragen wurden. Aus diesem Grunde muß für das Übertragen von neuen und/oder geänderten Daten zusätzlich ein darauf besonders abgestelltes Aufdatverfahren verwendet werden. Dazu sind die Hauptspeicherbereiche HSB von Basis- und Zusatzsystem BAS, ZAS und der Zwischenspeicherbereich ZSB in Segmente aufgeteilt.

Beim Einschreiben von Daten in den Hauptspeicherbereich HSB des Basissystemes BAS wird der Inhalt desjenigen Segmentes ausgelesen, auf das beim Einschreiben schreibend zugegriffen wurde. Der Inhalt des gesamten Segmentes wird daraufhin zusammen mit einer Positionsinformation in den Zwischenspeicherbereich ZSB eingeschrieben. Die Positionsinformation beinhaltet wieder wie zuvor Daten über die Position im Hauptspeicherbereich HSB des Basissystemes BAS und darüber hinaus zusätzlich zumindest Informationen über die Datenmenge, in diesem Falle also Informationen über die Größe des Segmentes.

Der Inhalt des gesamten Segmentes wird aus dem Zwischenspeicherbereich ZSB an das Zusatzsystem ZAS übertragen und unter Auswertung der Positionsinformation in den Hauptspeicherbereich HSB des Zusatzsystemes ZAS eingeschrieben. Auf diese Weise können auch die sich während des abschnittsweisen Aufdatens ergebenden Veränderungen schnell und sicher an das Zusatzsystem ZAS übertragen werden. Für den Fall, daß sich neue und/oder geänderten Daten in ein und demselben Segment des Hauptspeicherbereiches HSB des Basissystemes BAS ergeben, können sämtliche geänderten Daten dieses Segmentes in einem einzigen Übertragungsvorgang in den Zwischenspeicherbereich ZSB übertragen werden. Damit ist sichergestellt, daß nicht jedes geänderte Datum, z.B. ein einzelnes Byte, einzeln übertragen wird, sondern daß statt dessen beispielsweise eine komplette Datenstruktur, die vollständig in diesem Segment Platz findet, übertragen werden kann.

Um die sich während des Aufdatens ergebenden Veränderungen im Hauptspeicherbereich HSB des Basissystemes BAS überwachen zu können, ist jedem Segment des Hauptspeicherbereiches zumindest des Basissystemes BAS eine Statusinformation zugeordnet. Zu Beginn des Aufdatverfahrens wird jede Statusinformation auf einen Wert gesetzt, der anzeigt, daß die Daten des betreffenden Segmentes bisher noch nicht an das Zusatzsystem ZAS übertragen wurden. Sobald die Daten eines Segmentes an das Zusatzsystem ZAS übertragen wurden, wird die Statusinformation des betreffenden Segmentes auf einen Wert gesetzt, der anzeigt, daß die Daten des betreffenden Segmentes an das Zusatzsystem ZAS übertragen wurden. Werden in ein Segment neue und/oder geänderte Daten eingeschrieben, wird die Statusinformation des betreffenden Segmentes auf einen Wert gesetzt, der anzeigt, daß die Daten des betreffenden Segmentes noch nicht an das Zusatzsystem ZAS übertragen wurden. Die Statusinformationen werden ausgewertet, so daß nur die Daten derjenigen Segmente an das Zusatzsystem ZAS übertragen werden, deren Statusinformation anzeigt, daß die Daten des betreffenden Segmentes noch nicht an das Zusatzsystem ZAS übertragen wurden. Damit ist es also möglich, im Falle neuer und/oder geänderter Daten im Hauptspeicherbereich HSB des Basissystemes BAS die Änderungen selektiv zu übertragen.

In einem ersten Aufdatdurchlauf werden dann zunächst die Daten aller Segmente des Hauptspeicherbereiches HSB des Basissystemes BAS in einer bestimmten Abfolge an das Zusatzsystem ZAS übertragen. In mindestens einem weiteren Aufdatdurchlauf werden sodann jeweils nur noch die Daten derjenigen Segmente des Hauptspeicherbereiches HSB des Basissystemes BAS an das Zusatzsystem ZAS übertragen, deren Statusinformation anzeigt, daß die Daten des betreffenden Segmentes bisher noch nicht an das Zusatzsystem ZAS übertragen wurden.

Das Basissystem BAS arbeitet zur Steuerung des technischen Prozesses TP ein im Hauptspeicherbereich HSB gespeichertes Steuerungsprogramm ab. Dieses Programm ist - wie bei der Steuerung von technischen Prozessen TP allgemein üblich - in einzelne Aufgaben, sogenannte Tasks, unterteilt, denen jeweils eine bestimmte Priorität zugeordnet ist. Tasks, mit denen wichtige und/oder zeitkritische Funktionen überwacht werden, erhalten eine hohe Priorität, andere Tasks, deren Ausführung für die Steuerung des technischen Prozesses TP von untergeordneter Bedeutung ist, wie z.B. das Anzeigen der Uhrzeit, erhalten eine niedrige Priorität. Wenn die Ausführung bestimmter Aufgaben zeitweise zurückgestellt wird, steht die Zeit, die zuvor zur Ausführung dieser Aufgaben benötigt wurde, für andere Aufgaben, z.B. das Aufdaten, zur Verfügung.

Das Aufdatverfahren ist damit in einer vorteilhaften Ausgestaltung besonders schnell und effizient durchführbar, wenn nach dem ersten Aufdatdurchlauf Aufgaben mit einer Priorität unterhalb einer ersten Prioritätsschranke zurückgestellt werden und wenn nach Abschluß des Aufdatverfahrens Aufgaben mit jeder Priorität wieder ausgeführt werden. Nach dem ersten Aufdatdurchlauf ist durch abschnittsweises Auslesen aus dem Hauptspeicherbereich des Basissystemes BAS und Einschreiben in den Hauptspeicherbereich HSB des Zusatzsystemes ZAS der Grunddatenbestand des Basissystemes BAS an das Zusatzsystem ZAS übertragen. Im Zuge der Ausführung des Aufdatverfahrens sind damit nur noch die Änderungen, die sich während dieses ersten Aufdatdurchlaufes ergeben haben, zu übertragen. Werden jetzt Aufgaben mit einer Priorität unterhalb einer ersten Prioritätsschranke zurückgestellt, so steht für das Übertragen der Änderungen zusätzlich auch die Zeit zur Verfügung, die zuvor für die Ausführung der Aufgaben mit der Priorität unterhalb der ersten Prioritätsschranke erforderlich war.

Mithin können jetzt also in einem einzelnen weiteren Aufdatdurchlauf sehr viele geänderte Segmente übertragen werden. Das Aufdaten kommt immer dann sehr schnell zum Ende, wenn in jedem einzelnen Aufdatdurchlauf die Anzahl der übertragenen Segmente kleiner ist als die Anzahl neu hinzukommender, geänderter Segmente. Um dies jeweils sicher gewährleisten zu können, kann die Prioritätsschranke vorgebbar sein, so daß z.B. auch der Endanwender die erste Prioritätsschranke festlegen kann.

Das Aufdatverfahren kommt noch schneller zum Ende, wenn nach jedem weiteren Aufdatdurchlauf und/oder nach einer festen Anzahl weiterer Aufdatdurchläufe Aufgaben mit einer Priorität unterhalb einer nächst-höheren Prioritätsschranke zurückgestellt werden. Damit nimmt bei weiteren Aufdatdurchläufen die Zeit, die für das Aufdaten zur Verfügung steht, zu, so daß eine zunehmende Anzahl von Segmenten übertragen werden kann. Durch das fortgesetzte Zurückstellen von Aufgaben ergeben sich zudem schließlich nur noch wenige neue und/oder geänderte Daten im Hauptspeicherbereich HSB des Basissystemes BAS, so daß nicht nur die Anzahl der übertragenen Segmente ansteigt, sondern auch die Anzahl der aufgrund zwischenzeitlich aufgetretener Änderungen zu übertragenden Segmente abnimmt.

Das Aufdaten gilt als durchgeführt, wenn sowohl der erste Aufdatdurchlauf, in dem zunächst die Daten aller Segmente des Hauptspeicherbereiches HSB des Basissystemes BAS in einer bestimmten Abfolge an das Zusatzsystem ZAS übertragen werden, als auch der mindestens eine weitere Aufdatdurchlauf, in dem sodann nur noch die Daten derjenigen Segmente des Hauptspeicherbereiches HSB des Basissystemes BAS an das Zusatzsystem ZAS übertragen werden, deren Statusinformation anzeigt, daß die Daten des betreffenden Segmentes noch an das Zusatzsystem ZAS zu übertragen sind, beendet ist.

Der mindestens eine weitere Aufdatdurchlauf ist seinerseits beendet, wenn sämtliche Statusinformationen der Segmente des Hauptspeicherbereiches HSB des Basissystemes BAS anzeigen, daß die Daten des betreffenden Segmentes bereits an das Zusatzsystem ZAS übertragen wurden.

Wenn das Aufdaten als durchgeführt gilt, kann fallweise zusätzlich - zur Erhöhung der Sicherheit - in beiden Automatisierungssystemen BAS, ZAS eine Prüfgröße über die aufzudatenden bzw. die aufgedateten Daten ermittelt werden. Die Prüfgröße kann beispielsweise eine Prüfsumme oder eine Signatur sein. Die ermittelten Prüfgrößen werden über die Kommunikationsmittel KM ausgetauscht und miteinander verglichen. Sind die Prüfgrößen identisch, gilt das Aufdaten als fehlerfrei beendet, andernfalls wird das Aufdatverfahren ganz oder teilweise wiederholt. Um im Fehlerfall auch das teilweise Wiederholen des Aufdatens zu ermöglichen, kann die Prüfgröße so aufgebaut sein, daß sich durch geeignete Interpretation ermitteln läßt, für welche Daten das Aufdatverfahren teilweise zu wiederholen ist.

Durch ein Automatisierungsgesamtsystem AGS, das einen Zwischenspeicherbereich ZSB aufweist und das beschriebene Aufdatverfahren ausführt, läßt sich das Aufdaten realisieren. In einer vorteilhaften Ausgestaltung weist - abweichend von der Darstellung in FIG 1 - eines der Automatisierungssysteme BAS, ZAS eines solchen Automatisierungsgesamtsystemes AGS den Zwischenspeicherbereich ZSB auf. Das Automatisierungssystem BAS, ZAS kann entweder das Basisautomatisierungssystem BAS oder das Zusatzautomatisierungssystem ZAS sein.

## Patentansprüche

1. Aufdatverfahren zum Ankoppeln eines Zusatzautomatisierungssystemes (ZAS) an ein ein Basisautomatisierungssystem (BAS) aufweisendes Automatisierungsgesamtsystem (AGS), welches einen technischen Prozeß (TP) unterbrechungsfrei steuert, wobei die Automatisierungssysteme (BAS, ZAS) jeweils Zugriff auf einen eigenen Hauptspeicherbereich (HSB) haben und über Kommunikationsmittel (KM) Daten austauschen, wobei der Inhalt des Hauptspeicherbereiches (HSB) des Basisautomatisierungssystemes (BAS) aufgrund der unterbrechungsfreien Steuerung des technischen Prozesses (TP) kontinuierlichen Veränderungen unterworfen ist und durch abschnittsweises Auslesen und Einschreiben in den Hauptspeicherbereich (HSB) des Zusatzautomatisierungssystem (ZAS) an dieses übertragen wird,
**dadurch gekennzeichnet,**
- daß beim abschnittsweisen Auslesen von Daten aus dem Hauptspeicherbereich (HSB) des Basisautomatisierungssystemes (BAS) dieselben Daten in einen Zwischenspeicherbereich (ZSB) eingeschrieben werden,
- daß beim Einschreiben von Daten in den Hauptspeicherbereich (HSB) des Basisautomatisierungssystemes (BAS) dieselben Daten zusammen mit einer Positionsinformation zusätzlich auch in den Zwischenspeicherbereich (ZSB) eingeschrieben werden,
- daß der Inhalt des Zwischenspeicherbereiches (ZSB) an das Zusatzautomatisierungssystem (ZAS) übertragen wird und
- daß die aus dem Zwischenspeicherbereich (ZSB) an das Zusatzautomatisierungssystem (ZAS) übertragenen Daten gegebenenfalls unter Auswertung der Positionsinformation in den Hauptspeicherbereich (HSB) des Zusatzautomatisierungssystemes (ZAS) eingeschrieben werden.

2. Aufdatverfahren nach Anspruch 1, **dadurch gekennzeichnet**, daß beim abschnittsweisen Auslesen von Daten aus dem Hauptspeicherbereich (HSB) des Basisautomatisierungssystemes (BAS) dieselben Daten zusammen mit einer Positionsinformation in den Zwischenspeicherbereich (ZSB) eingeschrieben werden.

3. Aufdatverfahren nach Anspruch 1 oder 2, **dadurch gekennzeichnet**, daß das Einschreiben von Daten in den Zwischenspeicherbereich (ZSB) jeweils zu vorbestimmten Zeitpunkten erfolgt.

4. Aufdatverfahren nach Anspruch 1, 2 oder 3, **dadurch gekennzeichnet**, daß diejenigen Daten, die beim Einschreiben von Daten in den Hauptspeicherbereich (HSB) des Basisautomatisierungssystemes (BAS) zusätzlich auch in den Zwischenspeicherbereich (ZSB) eingeschrieben wurden, jeweils unverzüglich an das Zusatzautomatisierungssystem (ZAS) übertragen werden.

5. Aufdatverfahren nach einem der Ansprüche 1 bis 4,
**dadurch gekennzeichnet,**
- daß die Hauptspeicherbereiche (HSB) in Segmente aufgeteilt ist,
- daß beim Einschreiben von Daten in den Hauptspeicherbereich (HSB) des Basisautomatisierungssystemes (BAS) der Inhalt desjenigen Segmentes ausgelesen wird, auf das schreibend zugegriffen wurde,
- daß der Inhalt des gesamten Segmentes an das Zusatzautomatisierungssystem (ZAS) übertragen und in dessen Hauptspeicherbereich (HSB) eingeschrieben wird.

6. Aufdatverfahren nach einem der Ansprüche 1 bis 4,
**dadurch gekennzeichnet,**
- daß die Hauptspeicherbereiche (HSB) und der Zwischenspeicherbereich (ZSB) in Segmente aufgeteilt sind,
- daß beim Einschreiben von Daten in den Hauptspeicherbereich (HSB) des Basisautomatisierungssystemes (BAS) der Inhalt desjenigen Segmentes ausgelesen wird, auf das schreibend zugegriffen wurde,
- daß der Inhalt des gesamten Segmentes daraufhin zusammen mit einer Positionsinformation in den Zwischenspeicherbereich (ZSB) eingeschrieben wird und
- daß der Inhalt des gesamten Segmentes aus dem Zwischenspeicherbereich (ZSB) an das Zusatzautomatisierungssystem (ZAS) übertragen und unter Auswertung der Positionsinformation in dessen Hauptspeicherbereich (HSB) eingeschrieben wird.

7. Aufdatverfahren nach Anspruch 5 oder 6,
**dadurch gekennzeichnet**,
- daß jedem Segment des Hauptspeicherbereiches (HSB) zumindest des Basisautomatisierungssystemes (BAS) eine Statusinformation zugeordnet ist,
- daß zu Beginn des Aufdatverfahrens jede Statusinformation auf einen Wert gesetzt wird, der anzeigt, daß die Daten des betreffenden Segmentes bisher noch nicht an das Zusatzautomatisierungssystem (ZAS) übertragen wurden,
- daß die Statusinformation eines Segmentes auf einen Wert gesetzt wird, der anzeigt, daß die Daten des betreffenden Segmentes an das Zusatzautomatisierungssystem (ZAS) übertragen wurden, wenn die Daten des betreffenden Segmentes an das Zusatzautomatisierungssystem (ZAS) übertragen werden,
- daß die Statusinformation eines Segmentes auf einen Wert gesetzt wird, der anzeigt, daß die Daten des betreffenden Segmentes noch an das Zusatzautomatisierungssystem (ZAS) zu übertragen sind, sofern in das Segment neue oder geänderte Daten eingeschrieben werden,
- daß die Statusinformationen ausgewertet werden, so daß nur die Daten derjenigen Segmente an das Zusatzautomatisierungssystem (ZAS) übertragen werden, deren Statusinformation anzeigt, daß die Daten des betreffenden Segmentes noch an das Zusatzautomatisierungssystem (ZAS) zu übertragen sind.

8. Aufdatverfahren nach Anspruch 7,
**dadurch gekennzeichnet,**
- daß in einem ersten Aufdatdurchlauf zunächst die Daten aller Segmente des Hauptspeicherbereiches (HSB) des Basisautomatisierungssystemes (BAS) in einer bestimmten Abfolge an das Zusatzautomatisierungssystem (ZAS) übertragen werden,
- daß in mindestens einem weiteren Aufdatdurchlauf sodann jeweils nur noch die Daten derjenigen Segmente des Hauptspeicherbereiches (HSB) des Basisautomatisierungssystemes (BAS) an das Zusatzautomatisierungssystem (ZAS) übertragen werden, deren Statusinformation anzeigt, daß die Daten des betreffenden Segmentes bisher noch an das Zusatzautomatisierungssystem (ZAS) zu übertragen sind.

9. Aufdatverfahren nach Anspruch 8,
**dadurch gekennzeichnet,**
- daß das Basisautomatisierungssystem (BAS) zur Steuerung des technischen Prozesses (TP) Aufgaben ausführt, denen jeweils eine bestimmte Priorität zugeordnet ist,
- daß nach dem ersten Aufdatdurchlauf Aufgaben mit einer Priorität unterhalb einer ersten Prioritätsschranke zurückgestellt werden und
- daß nach Abschluß des Aufdatverfahrens Aufgaben mit jeder Priorität wieder ausgeführt werden.

10. Aufdatverfahren nach Anspruch 9, **dadurch gekennzeichnet, daß** nach jedem weiteren Aufdatdurchlauf Aufgaben mit einer Priorität unterhalb einer nächsthöheren Prioritätsschranke zurückgestellt werden.

11. Automatisierungsgesamtsystem zur unterbrechungsfreien Steuerung eines technischen Prozesses, das ein Basisautomatisierungssystem (BAS) aufweist,
- wobei an das Automatisierungsgesamtsystem (AGS) ein Zusatzautomatisierungssystem (ZAS) ankoppelbar ist,
- wobei beide Automatisierungssysteme (BAS, ZAS) zumindest
-- einen Hauptspeicherbereich (HSB), in dem zumindest Daten und/oder Maschinenbefehle abgespeichert sind,
-- einen Prozessor (P) zur Steuerung des technischen Prozesses (TP) durch Abarbeitung der Maschinenbefehle,
-- Kommunikationsmittel (KM) zur Kommunikation mit dem technischen Prozeß (TP) und Kommunikationsmittel (KM) zur Kommunikation mit anderen Automatisierungssystemen (BAS, ZAS) des Automatisierungsgesamtsystemes (AGS) und
-- einen Bus, der zumindest Kommunikationsmittel (KM), Prozessor (P) und Hauptspeicherbereich (HSB) miteinander verbindet,
aufweisen,
- wobei der Inhalt des Hauptspeicherbereiches (HSB) des Basisautomatisierungssystemes (BAS)
-- aufgrund der unterbrechungsfreien Steuerung des technischen Prozesses (TP) kontinuierlichen Veränderungen unterworfen ist und
-- durch abschnittsweises Auslesen und Einschreiben in den Hauptspeicherbereich (HSB) des Zusatzautomatisierungssystemes (ZAS) an dieses übertragbar ist,
**dadurch gekennzeichnet**,
- daß das Automatisierungsgesamtsystem (AGS) einen Zwischenspeicherbereich (ZSB) aufweist,
- daß beim abschnittsweisen Auslesen von Daten aus dem Hauptspeicherbereich (HSB) des Basisautomatisierungssystemes (BAS) dieselben Daten in den Zwischenspeicherbereich (ZSB) einschreibbar sind,
- daß beim Einschreiben von Daten in den Hauptspeicherbereich (HSB) des Basisautomatisierungssystemes (BAS) dieselben Daten zusammen mit einer Positionsinformation zusätzlich auch in den Zwischenspeicherbereich (ZSB) einschreibbar sind,
- daß der Inhalt des Zwischenspeicherbereiches (ZSB) an das Zusatzautomatisierungssystem (ZAS) übertragbar ist und
- daß die vom ersten Automatisierungssystem (ZAS) aus dem Zwischenspeicherbereich (ZSB) auslesbaren Daten gegebenenfalls unter Auswertung der Positionsinformation in den Hauptspeicherbereich (HSB) des Zusatzautomatisierungssystem (ZAS) einschreibbar sind.

12. Automatisierungssystem nach Anspruch 11, **dadurch gekennzeichnet**, daß beim abschnittsweisen Auslesen von Daten aus dem Hauptspeicherbereich (HSB) des Basisautomatisierungssystemes (BAS) dieselben Daten zusammen mit einer Positionsinformation in den Zwischenspeicherbereich (ZSB) einschreibbar sind.

13. Automatisierungssystem nach Anspruch 11 oder 12, **dadurch gekennzeichnet,**
- daß die Hauptspeicherbereiche (HSB) der Automatisierungssysteme (ZAS, BAS) und der Zwischenspeicherbereich (ZSB) in Segmente aufgeteilt sind,
- daß beim Einschreiben von Daten in den Hauptspeicherbereich (HSB) des Basisautomatisierungssystemes (BAS) der Inhalt desjenigen Segmentes auslesbar ist, auf das schreibend zugegriffen wurde,
- daß der Inhalt des gesamten Segmentes daraufhin zusammen mit einer Positionsinformation in den Zwischenspeicherbereich (ZSB) einschreibbar ist und
- daß der Inhalt des gesamten Segmentes aus dem Zwischenspeicherbereich (ZSB) an das Zusatzautomatisierungssystem (ZAS) übertragbar und unter Auswertung der Positionsinformation in dessen Hauptspeicherbereich (HSB) einschreibbar ist.

14. Automatisierungssystem eines Automatisierungsgesamtsystemes nach einem der Ansprüche 11 bis 13, **dadurch gekennzeichnet**, daß das Automatisierungssystem(BAS, ZAS) den Zwischenspeicherbereich (ZSB) aufweist.

15. Automatisierungssystem eines Automatisierungsgesamtsystemes nach einem der Ansprüche 11 bis 14, **dadurch gekennzeichnet**, daß jedem Segment des Hauptspeicherbereiches (HSB) eine Statusinformation zugeordnet ist, mit deren Auswertung das Aufdatverfahren nach einem der Ansprüche 7 bis 10 durchführbar ist.

## Claims

1. Updating process for connecting an auxiliary automation system (ZAS) to an overall automation system (AGS) incorporating a base automation system (BAS), which controls a technical process (TP) in an uninterrupted manner, wherein the respective automation systems (BAS, ZAS) have access to a separate main memory area (HSB) and exchange data via communication means (KM), wherein, due to the uninterrupted control of the technical process (TP), the contents of the main memory area (HSB) of the base automation system (BAS) are subject to continuous modifications, and are transmitted to the auxiliary automation system (ZAS) by section-by-section readout from and writing to the main memory area (HSB) of the auxiliary automation system (ZAS), **characterised in that**
- during the section-by-section readout of data from the main memory area (HSB) of the base automation system (BAS), these same data are written to a buffer memory area (ZSB),
- during the writing of data to the main memory area (HSB) of the base automation system (BAS), these same data are also written to the buffer memory area (ZSB) along with a position information message,
- the contents of the buffer memory area (ZSB) are transmitted to an auxiliary automation system (ZAS), and
- the data transmitted from the buffer memory area (ZSB) to the auxiliary automation system (ZAS) are optionally written to the main memory area (HSB) of the auxiliary automation system (ZAS) on evaluation of the position information message.

2. Updating process according to Claim 1,
**characterised in that** during the section-by-section readout of data from the main memory area (HSB) of the base automation system (BAS), these same data are written to the buffer memory area (ZSB) along with a position information message.

3. Updating process according to Claim 1 or 2,
**characterised in that** the writing of data to the buffer memory area (ZSB) is always effected at predetermined times.

4. Updating process according to Claim 1, 2 or 3,
**characterised in that** those data that were also written to the buffer memory area (ZSB) during the writing of data to the main memory area (HSB) of the base automation system (BAS) are always immediately transmitted to the auxiliary automation system (ZAS).

5. Updating process according to one of Claims 1 to 4,
**characterised in that**
- the main memory area (HSB) is divided into segments,
- during the writing of data to the main memory area (HSB) of the base automation system (BAS) the contents of that segment to which write access was given are read out,
- the contents of the entire segment are transmitted to the auxiliary automation system (ZAS) and are written to its main memory area (HSB).

6. Updating process according to one of Claims 1 to 4,
**characterised in that**
- the main memory areas (HSB) and the buffer memory area (ZSB) are divided into segments,
- during the writing of data to the main memory area (HSB) of the base automation system (BAS) the contents of those segments to which write access was given are read out,
- as a result of this, the contents of the entire segment are written to the buffer memory area (ZSB) along with a position information message and
- the contents of the entire segment are transmitted from the buffer memory area (ZSB) to the auxiliary automation system (ZAS) and written to its main memory area (HSB) on evaluation of the position information message.

7. Updating process according to Claim 5 or 6,
**characterised in that**
- a status information message is assigned to each segment of the main memory area (HSB) at least of the base automation system (BAS),
- at the start of the updating process each status information message is set to a value which indicates that the data of the relevant segment have not yet been transmitted to the auxiliary automation system (ZAS),
- the status information message of a segment is set to a value which indicates that the data of the relevant segment have been transmitted to the auxiliary automation system (ZAS) if the data of the relevant segment are transmitted to the auxiliary automation system (ZAS),
- the status information message of a segment is set to a value which indicates that the data of the relevant segment are still to be transmitted to the auxiliary automation system (ZAS), provided new or modified data are written to the segment,
- the status information messages are evaluated so that only the data of those segments are transmitted to the auxiliary automation system (ZAS), whose status information message indicates that the data of the relevant segment are still to be transmitted to the auxiliary automation system (ZAS).

8. Updating process according to Claim 7,
**characterised in that**
- in a first updating run the data of all segments of the main memory area (HSB) of the base automation system (BAS) are first transmitted to the auxiliary automation system (ZAS) in a specific sequence,
- in at least one further updating run in each case only the data of those segments of the main memory area (HSB) of the base automation system (BAS), whose status information message indicates that the data of the relevant segment have still to be transmitted to the auxiliary automation system (ZAS), are then transmitted to the auxiliary automation system (ZAS).

9. Updating process according to Claim 8,
**characterised in that**
- the base automation system (BAS) executes tasks for controlling the technical process (TP), to which a specific priority is assigned in each case,
- after the first updating run, tasks with a priority below a first priority limit are deferred and
- on completion of the updating process tasks with any priority are again executed.

10. Updating process according to Claim 9,
**characterised in that** after each further updating run tasks with a priority below a next highest priority limit are deferred.

11. Overall automation system for the uninterrupted control of a technical process, that incorporates a base automation system (BAS),
- wherein an auxiliary automation system (ZAS) is connectable to the overall automation system (AGS),
- wherein both automation systems (BAS, ZAS) have at least
-- a main memory area (HSB) in which at least data and/or machine instructions are stored,
-- a processor (P) for controlling the technical process (TP) by processing the machine instructions,
-- communication means (KM) for communication with the technical process (TP) and communication means (KM) for communication with other automation systems (BAS, ZAS) of the overall automation system (AGS) and
-- a bus that interconnects at least the communication means (KM), processor (P) and main memory area (HSB),
- wherein
-- due to the uninterrupted control of the technical process (TP) the contents of the main memory area (HSB) of the base automation system (BAS) are subjected to continuous modifications and
-- due to section-by-section readout from and writing to the main memory area (HSB) of the auxiliary automation system (ZAS) the contents of the main memory area (HSB) of the base automation system (BAS) can be transmitted to said auxiliary automation system,
**characterised in that**
- the overall automation system (AGS) has a buffer memory area (ZSB),
- during the section-by-section readout of data from the main memory area (HSB) of the base automation system (BAS), these same data can be written to the buffer memory area (ZSB),
- during the writing of data to the main memory area (HSB) of the base automation system (BAS), these same data can also be written to the buffer memory area (ZSB) along with a position information message,
- the contents of the buffer memory area (ZSB) can be transmitted to the auxiliary automation system (ZAS) and
- the data that can be read by the first automation system (ZAS) from the buffer memory area (ZSB) can optionally be written to the main memory area (HSB) of the auxiliary automation system (ZAS) on evaluation of the position information message.

12. Automation system according to Claim 11,
**characterised in that** during the section-by-section readout of data from the main memory area (HSB) of the base automation system (BAS) these same data can be written to the buffer memory area (ZSB) along with a position information message.

13. Automation system according to Claim 11 or 12,
**characterised in that**
- the main memory areas (HSB) of the automation systems (ZAS, BAS) and of the buffer memory area (ZSB) are divided into segments,
- during the writing of data to the main memory area (HSB) of the base automation system (BAS) the contents of that segment to which write access was given, can be read out,
- as a result of this, the contents of the entire segment can be written to the buffer memory area (ZSB) along with a position information message, and
- the contents of the entire segment can be transmitted from the buffer memory area (ZSB) to the auxiliary automation system (ZAS) and can be written to its main memory area (HSB) on evaluation of the position information message.

14. Automation system of an overall automation system according to one of Claims 11 to 13, **characterised in that** the automation system (BAS, ZAS) incorporates the buffer memory area (ZSB).

15. Automation system of an overall automation system according to one of Claims 11 to 14, **characterised in that** a status information message with whose evaluation the updating process can be implemented according to one of Claims 7 to 10, is assigned to each segment of the main memory area (HSB).

## Revendications

1. Procédé de chargement de données pour le raccordement d'un système (ZAS) d'automatisation supplémentaire à un système (AGS) global d'automatisation comportant un système (BAS) d'automatisation de base et commandant sans interruption une opération (TP) technique, les systèmes (BAS, ZAS) d'automatisation ayant accès chacun à une zone (HSB) de mémoire principale propre et échangeant des données par l'intermédiaire de moyens (KM) de communication, le contenu de la zone (HSB) de mémoire principale du système (BAS) d'automatisation de base étant soumis à des modifications continues en raison de la commande sans interruption de l'opération (TP) technique et étant, par lecture par parties et écriture dans la zone (HSB) de mémoire principale du système (ZAS) d'automatisation supplémentaire, transmis à celui-ci,
**caractérisé en ce que**
- lors de la lecture par parties de données dans la zone (HSB) de mémoire principale du système (BAS) d'automatisation de base, les mêmes données sont écrites dans une zone (ZSB) de mémoire intermédiaire,
- lors de l'écriture de données dans la zone (HSB) de mémoire principale du système (BAS) d'automatisation de base, les mêmes données sont écrites, conjointement avec une information de position, de plus aussi dans la zone (ZSB) de mémoire tampon,
- le contenu de la zone (ZSB) de mémoire tampon est transmis au système (ZAS) d'automatisation supplémentaire et
- les données transmises de la zone (ZSB) de mémoire tampon au système (ZAS) d'automatisation supplémentaire sont écrites, le cas échéant en exploitant l'information de position, dans la zone (HSB) de mémoire principale du système (ZAS) d'automatisation supplémentaire.

2. Procédé de chargement de données suivant la revendication 1, **caractérisé en ce que** , lors de la lecture par parties de données dans la zone HSB de mémoire principale du système (BAS) d'automatisation de base, les mêmes données sont écrites, conjointement avec une information de position, dans la zone (ZSB) de mémoire tampon.

3. Procédé de chargement de données suivant la revendication 1 ou 2, **caractérisé en ce que** l'écriture de données dans la zone (ZSB) de mémoire tampon s'effectue chaque fois à des instants prédéterminés.

4. Procédé de chargement de données suivant la revendication 1, 2 ou 3, **caractérisé en ce que** les données qui ont été écrites lors de l'écriture de données dans la zone HSB de mémoire principale du système (ZAS) d'automatisation supplémentaire, de plus aussi dans la zone (ZSB) de mémoire tampon sont transmises chaque fois sans délai au système (ZAS) d'automatisation supplémentaire.

5. Procédé de chargement de données suivant l'une des revendications 1 à 4, **caractérisé en ce que**
- les zones (HSB) de mémoire principale sont subdivisées en segments,
- lors de l'écriture de données dans la zone HSB de mémoire principale du système (BAS) d'automatisation de base, il est lu le contenu du segment auquel il a été accédé en écriture,
- le contenu de tout le segment est transmis au système (ZAS) d'automatisation supplémentaire et est écrit dans sa zone (HSB) de mémoire principale.

6. Procédé de chargement de données suivant l'une des revendications 1 à 4, **caractérisé en ce que**
- les zones (HSB) de mémoire principale et la zone (ZSB) de mémoire intermédiaire sont subdivisées en segments,
- lors de l'écriture de données dans la zone (HSB) de mémoire principale du système (BAS) d'automatisation de base, il est lu le contenu du segment auquel il a été accédé en écriture,
- le contenu de tout le segment est ensuite écrit, conjointement avec une information de position, dans la zone (ZSB) de mémoire tampon et
- le contenu de tout le segment est transmis de la zone (ZSB) de mémoire tampon au système (ZAS) d'automatisation supplémentaire et écrit dans sa zone (HSB) de mémoire principale en exploitant l'information de position.

7. Procédé de chargement de données suivant la revendication 5 ou 6, **caractérisé en ce que**
- il est associé à chaque segment de la zone (HSB) de mémoire supplémentaire d'au moins le système (BAS) d'automatisation de base une information d'état,
- au début du procédé de chargement de données chaque information d'état est mise à une valeur qui indique que les données du segment concerné n'ont pas encore été transmises jusqu'à présent au système (ZAS) d'automatisation supplémentaire,
- l'information d'état d'un segment est mise à une valeur qui indique que les données du segment concerné n'ont pas été transmises au système (ZAS) d'automatisation supplémentaire si les données du segment concerné sont transmises au système (ZAS) d'automatisation supplémentaire,
- l'information d'état d'un segment est mise à une valeur qui indique que les données du segment concerné ne sont pas encore à transmettre au système (ZAS) d'automatisation supplémentaire dans la mesure où il est écrit dans le segment des données nouvelles ou modifiées,
- les informations d'état sont exploitées de telle manière que ne sont transmises au système (ZAS) d'automatisation supplémentaire que les données des segments dont l'information d'état indique que les données du segment concerné sont encore à transmettre au système (ZAS) d'automatisation supplémentaire.

8. Procédé de chargement de données suivant la revendication 7, **caractérisé en ce que**
- lors d'un premier cycle de chargement de données, d'abord les données de tous les segments de la zone (HSB) de mémoire principale du système (BAS) d'automatisation de base sont transmises au système (ZAS) d'automatisation supplémentaire en une succession déterminée,
- lors d'au moins un cycle de chargement de données supplémentaire, il n'est transmis ensuite au système (ZAS) d'automatisation supplémentaire chaque fois plus que les données des segments de la zone (HSB) de mémoire principale du système (BAS) d'automatisation de base dont l'information d'état indique que les données du segment concerné sont jusqu'à présent encore à transmettre au système (ZAS) d'automatisation supplémentaire.

9. Procédé de chargement de données suivant la revendication 8, **caractérisé en ce que**
- le système (BAS) d'automatisation de base exécute pour la commande de l'opération (TP) technique des tâches auxquelles chaque fois une priorité déterminée est associée,
- après le premier cycle de chargement de données, des charges ayant une priorité inférieure à une première limite de priorité sont remises à l'état initial et
- après achèvement du procédé de chargement de données, des tâches ayant chaque priorité sont à nouveau exécutées.

10. Procédé de chargement de données suivant la revendication 9, **caractérisé en ce que**, après chaque cycle de chargement de données supplémentaire, des tâches ayant une priorité inférieure à une limite de priorité juste supérieure sont remises à l'état initial.

11. Système global d'automatisation pour la commande sans interruption d'une opération technique, qui comporte un système (BAS) d'automatisation de base
- un système (ZAS) d'automatisation supplémentaire pouvant être raccordé au système (AGS) global d'automatisation,
- les deus systèmes (BAS, ZAS) d'automatisation comportant au moins
-- une zone (HSB) de mémoire principale dans laquelle sont enregistrées au moins des données et/ou des instructions pour les machines
-- un processeur (P) pour commander l'opération (TP) technique par traitement des instructions pour les machines,
-- des moyens (KM) de communication pour la communication avec l'opération (TP) technique et des moyens (KM) de communication pour la communication avec d'autres systèmes (BAS, ZAS) d'automatisation du système (AGS) global d'automatisation et
-- un bus qui relie les uns aux autres au moins les moyens (KM) de communication, le processeur (P) et la zone (HSB) de mémoire principale,
- le contenu de la zone (HSB) de mémoire principale du système (BAS) d'automatisation de base
-- étant soumis à des modifications permanentes en raison de la commande sans interruption de l'opération (TP) technique et
-- pouvant être transmis, par lecture par parties et écriture dans la zone (HSB) de mémoire principale du système (ZAS) d'automatisation supplémentaire, à ce dernier, **caractérisé en ce que**
- le système (AGS) global d'automatisation comporte une zone (ZSB) de mémoire tampon,
- lors de la lecture par parties de données dans la zone (HSB) de mémoire principale du système (BAS) d'automatisation de base, les mêmes données peuvent être écrites dans la zone (ZSB) de mémoire tampon,
- lors de l'écriture de données dans la zone (HSB) de mémoire principale du système (BAS) d'automatisation de base, les mêmes données peuvent être écrites, conjointement avec une information de position, de plus aussi dans la zone (ZSB) de mémoire tampon,
- le contenu de la zone (ZSB) de mémoire tampon peut être transmis au système (ZAS) d'automatisation supplémentaire et
- les données pouvant être lues par le premier système (ZAS) d'automatisation dans la zone (ZSB) de mémoire tampon pouvant être écrites, éventuellement en exploitant l'information de position, dans la zone (HSB) de mémoire principale du système (ZAS) d'automatisation supplémentaire.

12. Système d'automatisation suivant la revendication 11,
**caractérisé en ce que**, lors de la lecture par parties de données dans la zone (HSB) de mémoire principale du système (BAS) d'automatisation de base, les mêmes données peuvent être écrites, conjointement avec une information de position, dans la zone (ZSB) de mémoire tampon.

13. Système d'automatisation suivant la revendication 11 ou 12,
**caractérisé en ce que**
- les zones (HSB) de mémoire principale des systèmes (ZAS, BAS) d'automatisation et la zone (ZSB) de mémoire tampon sont subdivisées en segments,
- lors de l'écriture de données dans la zone (HSB) de mémoire principale du système (BAS) d'automatisation de base, le contenu du segment auquel il a été accédé en écriture peut être lu,
- le contenu de tout le segment peut être ensuite écrit, conjointement avec une information de position, dans la zone (ZSB) de mémoire tampon et
- le contenu de tout le segment peut être transmis de la zone (ZSB) de mémoire tampon au système (ZAS) d'automatisation supplémentaire et peut être écrit dans sa zone (HSB) de mémoire principale en exploitant l'information de position.

14. Système d'automatisation d'un système global d'automatisation suivant l'une des revendications 1 à 13, **caractérisé en ce que** le système (BAS, ZAS) d'automatisation comporte la zone (ZSB) de mémoire tampon.

15. Système d'automatisation d'un système global d'automatisation suivant l'une des revendications 11 à 14, **caractérisé en ce qu'**il est associé à chaque segment de la zone (HSB) de mémoire principale une information d'état par l'exploitation de laquelle le procédé de chargement de données suivant l'une des revendications 7 à 10 peut être mis en oeuvre.
